# EUROPEAN PATENT APPLICATION

(11) **EP 4 527 644 A1**
(43) Date of publication of application: **26.03.2025**
(21) Application number: 23198451.9
(22) Date of filing: 20.09.2023
(51) Int. Cl.: B60H 1/00, B60H 1/32, B60K 11/00

(54) **A THERMAL MANAGEMENT MODULE**

(71) Applicant: VALEO SYSTEMES THERMIQUES, 78320 Le Mesnil Saint-Denis (FR)
(72) Inventor: LIPOWSKI, Mateusz, 32 050 Skawina (PL); POTOK, Dariusz, 32 050 Skawina (PL); NOWAKOWSKI, Adrian, 32 050 Skawina (PL); MACHUL, Krzysztof, 32 050 Skawina (PL)
(74) Representative: Valeo Systèmes Thermiques

(57) **Abstract**

A thermal management module 100 includes a fluid hub 10, at least one fluid pump 30a, 30b and at least one heat exchanger 20. The fluid hub 10 includes fluid flow passages and multi-valves for defining and regulating fluid supply to the heat exchanger 20 to configure selective fluid communication between the fluid hub 10 and the heat exchanger 20. The fluid pump 30a, 30b is for circulation of fluid through the fluid flow passages and the heat exchanger 20 and for configuring fluid flow therebetween. The heat exchanger 20 is adapted to cool fluid received from the fluid pump for circulation through the heat generating components of the vehicle. The heat exchanger 20 with the fluid pump 30a, 30b mounted thereon is mounted on a vehicle and at least a portion of the fluid hub 10 is supported between the fluid pump 30a, 30b and the heat exchanger 20.

## Description

### TECHNICAL FIELD

The present invention relates to a thermal management module, more particularly, the present invention relates to a thermal management module for controlling fluid flow through vehicle heat exchangers.

### BACKGROUND

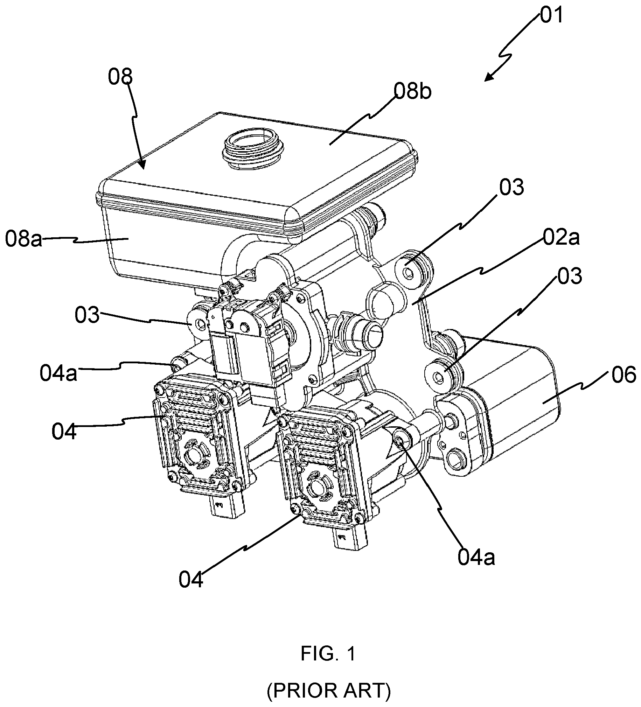

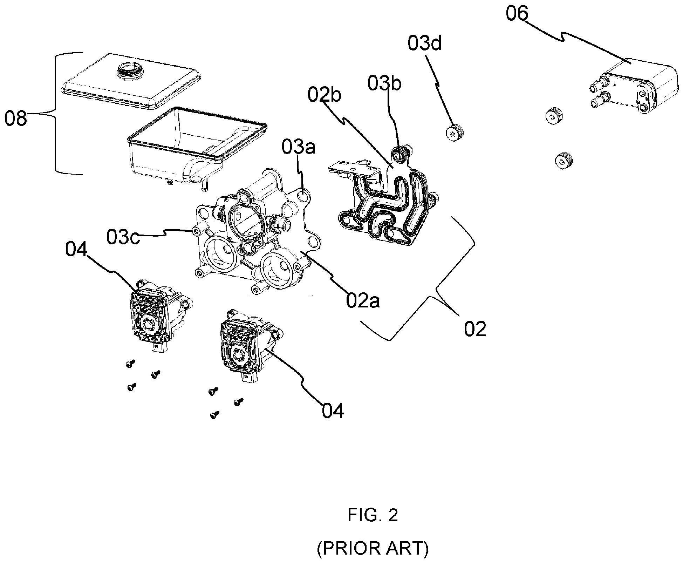

FIG. 1 and FIG. 2 illustrates an assembled and exploded view of the thermal management module 01. Generally, a thermal management module 01 includes a fluid hub 02, at least one fluid pump 04, at least one of the vehicle heat exchanger, for example a chiller 06 and a surge tank 08. Generally, the fluid hub 02 is formed by joining two planar components 02a and 02b of plastic material by plastic welding, wherein at least one of the planar components 02a, 02b is configured with channels that define the fluid flow passages when the first and second planar components 02a and 02b are joined to each other. Further, the fluid hub 02 configures multi-way valves controlled by a controller to selectively disrupt fluid flow through the internal fluid flow passages for defining different cooling circuits and regulating fluid supply to the vehicle heat exchangers 06 based on requirement. More specifically, the fluid hub 02 configures several cooling circuits, wherein one or more cooling fluids are routed through the different cooling circuits to achieve different cooling based on requirements, while still maintaining fluid isolation between the cooling fluids flowing through the different cooling circuits. The fluid pumps 04 drives the flow through the different cooling circuits configured based on operating configuration of the different valves configured in the fluid hub 02. The fluid hub 02 receives fluid stored in the surge tank 08 and selectively supplies the cooling fluids to the different heat exchangers 06 through the different cooling circuits configured based on the operative configuration of the valves in the fluid hub 02. One of the vehicle heat exchangers is the chiller 06, the chiller 06 is a plate type heat exchanger formed by joining a plurality of aluminum plates by brazing. The first and second planar portions 02a and 02b of the fluid hub 02 include respective mounting holes 03a and 03b that are aligned with respect to each other to configure through holes 03 for mounting the fluid hub 02 on the vehicle frame. The fluid hub 02 further includes mounting apertures or holed columns 03c for mounting the fluid pumps 04, the vehicle heat exchangers such as chiller 06 and other electronic components thereon. Generally, the mounting holes 03 receive dampers 03d for preventing vibration from the vehicle frame from reaching the delicate elements mounted on the fluid hub 02. Particularly, the fluid hub 02 acts as a structural component for mounting the vehicle heat exchangers 06 and fluid pumps 04 thereon.

However, the fluid hub being formed of plastic material and formed by joining planar components fail to exhibit sufficient material strength or material resistance to withstand the load of components mounted thereon and is prone to mechanical failure. More specifically, the plastic welding for joining the planar components of fluid hub is prone to failure causing reliability issues. Furthermore, the conventional thermal management modules face packaging issues as the various elements thereof such as chiller and the fluid pumps mounted in limited space in vehicular environment, thereby leading to complex fluid flow circuit and numerous connections causing pressure drop and losses.

Accordingly, there is a need for a thermal management module, wherein a component thereof exhibiting mechanical strength and capable of withstanding loads is used for mounting heavier elements of thermal management module such as fluid pumps, heat exchangers thereon. Further, there is a need for a thermal management module that is reliable and compact. Furthermore, there is a need for a thermal management module that configures simplified fluid flow circuits involving fewer connectors, thereby reducing the pressure drop there through.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### SUMMARY

A thermal management module is disclosed in accordance with an embodiment of the present invention. The thermal management module comprises at least one heat exchanger, a fluid hub, at least one fluid pump. The fluid hub comprises a plurality of fluid flow passages and multi-way valves for defining and regulating fluid supply to the vehicle heat exchanger to configure selective fluid communication between the fluid hub and the heat exchanger. The fluid pump is for circulation of fluid through the fluid flow passages and the vehicle heat exchanger and configuring fluid flow between the fluid hub and the vehicle heat exchanger. The heat exchanger adapted to cool fluid received from the fluid pump for circulation through the heat generating components disposed in the vehicle. The heat exchanger with at least one fluid pump mounted thereon is adapted to be mounted on a vehicle. Further, at least a portion of the fluid hub is supported between the fluid pump and the heat exchanger.

Preferably, the heat exchanger is configured with mounting holes for mounting the fluid pump on the heat exchanger.

Generally, the fluid hub is of plastic material and is comprising a collector housing and a distribution housing being connected to and in fluid communication with each other.

Particularly, the collector housing extends along a first direction A and is in fluid communication with a surge tank.

More specifically, the collector housing comprises openings and receives a bushel therein. The bushel is adapted to move within the collector housing to selectively establish or disrupt fluid communication between different openings based on relative position thereof within the collector housing to configure fluid flow passages and multiway valves.

Specifically, at least a portion of the distribution housing is mounted on the heat exchanger, supported between the fluid pump and the heat exchanger and said distribution housing is adapted to distribute the fluid received thereby from the collector housing to the fluid pump.

Particularly, the distribution housing comprises a first distribution web and a second distribution web extending in opposite directions B and C substantially orthogonal to the first direction A.

Generally, the first distribution web and the second distribution web comprise a central portion and arms radially extending from the central portion. The central portion is selectively in fluid communication with the collector hub based on operative configuration of the multi-way valve to supply fluid to the fluid pump.

Generally, the vehicle heat exchangers are at least one of a chiller, a radiator, a heater core, and a cooler for power electronics.

Specifically, the heat exchanger is a plate type heat exchanger of aluminium and formed by brazing multiple plates.

Particularly, the fluid pump is in fluid communication with the fluid hub on one side and the heat exchanger on the other side.

More specifically, the fluid pump is a radial pump adapted to centrally receive fluid from fluid hub, compress the fluid and direct compressed fluid to a periphery thereof.

In accordance with an embodiment of the present invention, the thermal management module includes two fluid pumps disposed on opposite sides of the heat exchanger.

More specifically, a first fluid pump is adapted to direct fluid to the heat exchanger and a second fluid pump is adapted to direct fluid from the fluid hub to drive unit.

Generally, the first fluid pump is in fluid communication with the heat exchanger via an outlet formed on the fluid hub and a connector.

Particularly, the surge tank is adapted to store the coolant therein and is disposed at highest position relative to other components of the thermal management module in a vertical direction when disposed in the vehicle.

Generally, the relative movement between the collector housing and the bushel to control fluid flow through the multi-way valves is controlled by a control unit to selectively disrupt fluid flow through the internal fluid flow passages.

Further, the thermal management module comprises mounting bolts adapted to sequentially pass through aligned mounting holes formed on the fluid pump, the fluid hub and the heat exchanger respectively.

Furthermore, the thermal management module comprises brackets secured to the heat exchanger for mounting the heat exchanger on the vehicle frame.

Generally, the brackets are formed with mounting holes that receive mounting bolts for mounting the brackets on vehicle frame and dampers are disposed between the mounting holes and the mounting bolts to prevent vibrations from vehicle frame reaching the heat exchanger and the fluid pump mounted on the heat exchanger.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of a conventional thermal management module, wherein a fluid hub is acting as a structural element on which fluid pumps and a heat exchanger are mounted;
FIG. 2 illustrates an exploded view of the conventional thermal management module of FIG. 1;
FIG. 3 illustrates an isometric view of a thermal management module in accordance with an embodiment of the present invention, wherein a heat exchanger is acting as a structural element on which fluid pumps, a fluid hub and other elements are mounted;
FIG. 4 illustrates an exploded view of the thermal management module of FIG. 2;
FIG. 5 illustrates an isometric view of a collector housing of the fluid hub of FIG. 3 with a bushel received within the collector housing;
FIG. 6 illustrates an isometric view of the bushel of FIG. 5;
FIG. 7 illustrates a sectional view of the thermal management module of FIG. 3 depicting one of the fluid pumps mounted on the heat exchanger, also is depicted an enlarged view depicting at least a portion of fluid hub supported between the fluid pump and the heat exchanger;
FIG. 8 illustrates another sectional view of the thermal management module of FIG. 2 depicting connection between one of the fluid pumps and the heat exchanger.
FIG. 9 illustrates a block diagram depicting inter-connection between and flow through the fluid pumps, the heat exchanger, fluid hub other elements in fluid communication with the fluid hub.

It must be noted that the figures disclose the invention in a detailed enough way to be implemented, said figures helping to better define the invention if needs be. The invention should however not be limited to the embodiment disclosed in the description.

### DETAILED DESCRIPTION

The present invention is explained with example of a thermal management system for a vehicle. The thermal management system includes a fluid hub, particularly, a coolant hub, at least one fluid pump and a vehicle heat exchanger, for example, a chiller. The coolant hub configures several cooling circuits, wherein one or more cooling fluids are routed through the different cooling circuits to achieve different cooling based on requirements, while still maintaining fluid isolation between the cooling fluids flowing through the cooling circuits. The fluid pump drives the fluid flow through the different cooling circuits configured based on operating configuration of different valves of the fluid hub. The thermal management system also includes fluid pumps, particularly, coolant pumps for cooling coolant to be supplied to a vehicle heat exchanger, particularly, a chiller that extracts heat from a vehicle battery, for example, battery of an electric vehicle. The fluid pumps, due to their weight, exert stresses on the components on which the pumps are mounted. In accordance with the present invention, the fluid pumps and the coolant hub are strategically mounted on robust components of the battery cooling system, for example, the chiller that is mounted on vehicle frame. The heat exchanger exhibits sufficient mechanical strength to withstand load of the fluid pumps and other components, such as coolant hub mounted thereon. The heat exchanger acts as structural component for bearing load of the fluid pumps and other components, such as coolant hub, apart from performing its function of cooling the coolant to be supplied to the batteries for cooling of the batteries. Such configuration of mounting different elements on the heat exchanger renders compact configuration to the thermal management system and addresses packaging issues. Although, the present invention is explained with example of thermal management module for a vehicle, wherein the fluid pumps are mounted on heat exchanger, the present is also applicable for other vehicular and non-vehicular environments, wherein it is required to mount various heavier components of a fluidic system on a structurally robust component of the fluidic system to render the fluidic system compact and address packaging issues.

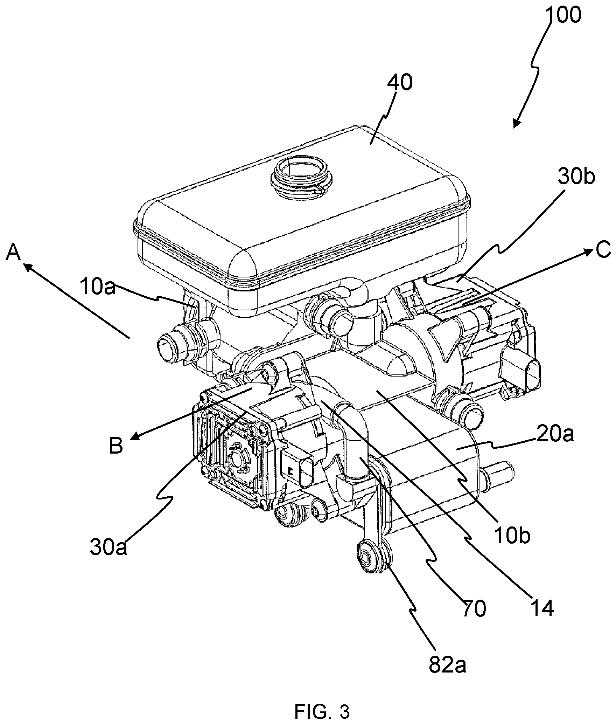

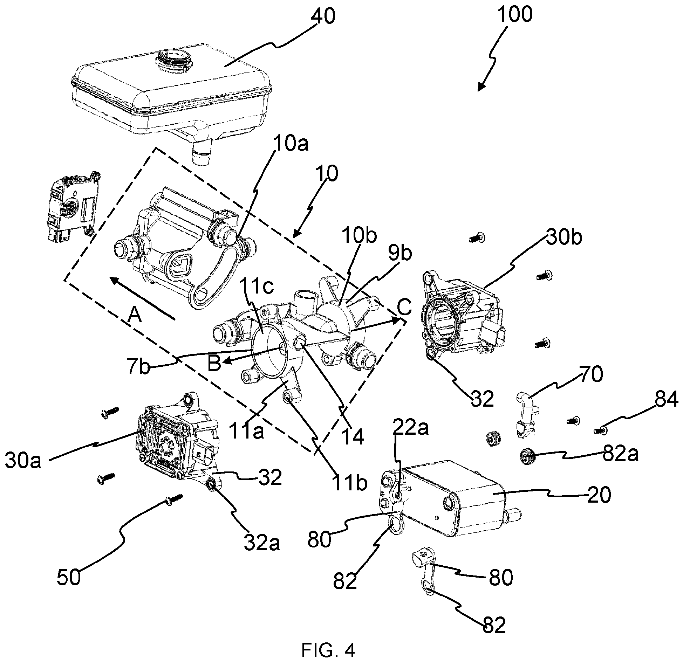

FIG. 3 and FIG. 4 illustrate different views of a thermal management module 100 in accordance with an embodiment of the present invention. Particularly, FIG. 3 illustrates an isometric view of a thermal management module 100 and FIG. 4 illustrates an exploded view of the thermal management module 100. The thermal management module 100 includes a fluid hub, particularly, a coolant hub 10, at least one fluid pump 30a, 30b and at least one heat exchanger 20, wherein the vehicle heat exchanger 20 is at least one of the chiller, a radiator, a heater core, and a cooler for power electronics.

The coolant hub 10, also referred to as a fluid hub 10 is of plastic material. The coolant hub 10 comprises a collector housing 10a and a distribution housing 10b being connected to and in fluid communication with each other. The coolant hub 10 configures multi-way valves to selectively establish and disrupt internal fluid flow passages to define several cooling circuits, wherein one or more cooling fluids are routed through the different cooling circuits to achieve different cooling based on requirements, while still maintaining fluid isolation between the cooling fluids flowing through the cooling circuits.

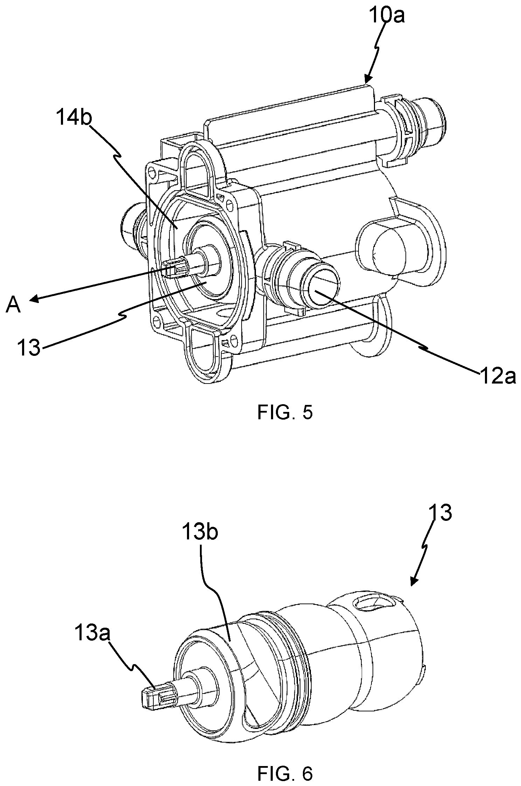

The collector housing 10a extends in a first direction A and is in fluid communication with a surge tank 40. FIG. 5 illustrates an isometric view of the collector housing 10a with a bushel 13 received inside the collector housing 10a. The collector housing 10a comprises openings 12a and a bushel 13. The openings 12a or ports are formed on the periphery of the collector housing 10a and the bushel 13 is received in the collector housing 10a. One or more openings 12a are connected to fluid supply pipes that supply the coolant fluid to the collector housing 10a. The bushel 13 moves within the collector housing 10a to selectively establish or disrupt fluid communication between different openings 12a based on relative position of the bushel 13 within the collector housing 12a to configure fluid flow passages and multiway valves. FIG. 6 illustrates an isometric view of the bushel 13. The bushel 13 includes an axle 13a connected to a drive to cause rotation of the bushel 13 inside the collector housing 10a. The bushel 13 further includes cutouts 13b formed thereon that get aligned to different openings 12a based on to angular position of the bushel 13 inside the collector housing 10a to configure internal fluid flow passages that define fluid communication between various openings 12a while still maintaining the internal fluid flow passages in fluid isolation with each other.

Such configuration of the bushel 13 moving relative to the collector housing 10a defines a plurality of fluid flow passages and multi-way valves 14b for defining and regulating coolant supply to the vehicle heat exchanger 20 to configure selective fluid communication between the coolant hub 10 and the heat exchanger 20. More specifically, the multi-way valves interacts with the fluid flow passages to configure fluid communication between the coolant hub 11 and the heat exchanger based on operating configuration of the multi-way valves. Generally, the fluid flow through multi-way valves 14b is regulated by controlling relative movement of the bushel 13 within the collector housing by a control unit. More specifically, the bushel 13 rotates within the collector housing 10a to selectively disrupt fluid flow through the internal fluid flow passages and define open and closed configuration of the multi-way valves 14b.

The distribution housing 10b comprises a first distribution web 7b and a second distribution web 9b extending in opposite directions B and C substantially orthogonal to the first direction A. The first distribution web 7b and the second distribution web 9b are functionally and structurally identical to each other. More specifically, each of the first distribution web 7b and the second distribution web 9b includes a central portion 11c and arms 11a radially extending from the central portion 11c. The central portion 11c of the first and second distribution webs 7b and 9b selectively receives fluid from the collector housing 10a based on operative configuration of the multi-way valves and supplies fluid to the respective fluid pumps 30a and 30b. The central portion 11c of each of the first and second distribution webs 7b and 9b defines an enclosure that is in fluid communication with the respective fluid pump 30a and 30b. The coolant pressurized in the fluid pump 30a flows from the first fluid pump 30a to the heat exchanger 20 via the outlet 14 formed on the central portion 11c of the first distribution web 7b. At least a portion of the distribution housing 10b, particularly, the arms 11a of the first and second distribution webs 7b and 9b are mounted on the opposite sides of heat exchanger 20 and supported between the heat exchanger 20 and the respective fluid pump 30a and 30b. The distribution housing 10b is adapted to distribute the coolant from the collector housing 10a to the fluid pump 30a, 30b. The surge tank 40 is adapted to store the coolant therein and is disposed at highest position relative to other components of the thermal management module 100 in a vertical direction when disposed in the vehicle, thereby creating a natural gradient of coolant flow from the surge tank 40 to the collector tank 10a of the coolant hub 10. The collector housing 10a controls fluid flow there-through by means of the internal fluid flow passages and multi-way valves 14b configured therein to define several cooling circuits. From the collector housing 10a the fluid is directed to the fluid pumps 30a and 30b by the distribution housing 10b. The distribution housing 10b includes radially extending arms 11a with mounting holes 11b formed thereon.

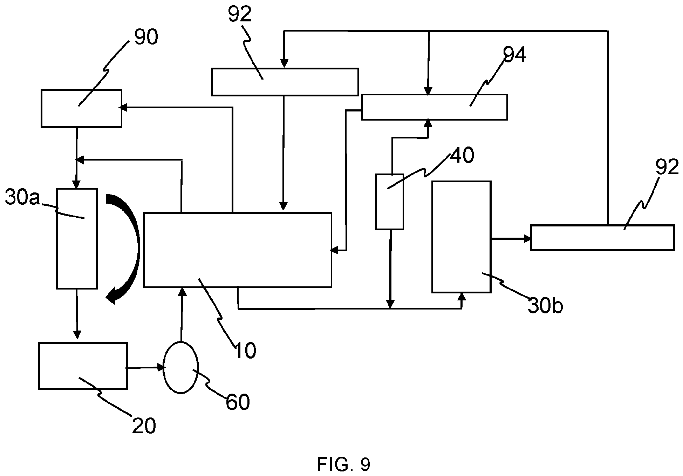

The fluid pump 30a, 30b is for circulation of fluid, particularly, coolant through the coolant flow passages and the vehicle heat exchangers 20 and is configuring coolant flow between the coolant flow passages and the heat exchanger 20. Generally, the fluid pump 30a, 30b is in fluid communication with the coolant hub 10 on one side and with the heat exchanger 20 on the other side. Generally, the thermal management module 100 includes two fluid pumps 30a and 30b mounted on opposite sides of the heat exchanger 20. Referring to FIG. 9, the first fluid pump 30a configures a first fluid circulation loop with the first fluid pump 30a and the fluid hub 10 being part of the first fluid circulation loop C1. The first fluid pump 30a is adapted to receive fluid from the fluid hub 10 and coolant heater 90 and direct the fluid received thereby to the heat exchanger 20. The fluid undergoes heat exchange in the heat exchanger 20 and the fluid processed in the heat exchanger 20 is directed back to the fluid hub 10 through the Rechargeable Energy Storage System (RESS) (60). The first fluid pump 30a is adapted to direct fluid to the heat exchanger 20 via the heat exchanger 20. The second fluid pump 30b is adapted to direct fluid from the fluid hub 10 to drive units 92. More specifically, the first fluid pump 30a is a radial pump adapted to centrally receive fluid from fluid hub 10, particularly, from the central portion 11c of the distribution web 7b, compress the fluid and direct compressed fluid to a periphery of the first fluid pump 30a. The periphery of the first fluid pump 30a is in fluid communication with the heat exchanger 20 via an outlet 14 configured on the fluid hub 10, particularly, the distribution web 7b and the outlet 14 being connected to and in fluid communication with the heat exchanger 20 via a connector 70. More specifically one end of the connector 70 is connected to the outlet 14 and the other end of the connector 70 is connected to the heat exchanger 20, thereby configuring fluid communication between the first fluid pump 30a and the heat exchanger 20. The fluid pump 30a, 30b includes radially extending flanges 32 with mounting holes 32a formed thereon. The second fluid pump 30b configures another fluid circulation loop, referred to as second fluid circulation loop independent of the first fluid circulation loop with drive units and the fluid hub 10 being part of the second fluid circulation loop. The second pump 30b directs the fluid received from the fluid hub 10 to the drive units 92. The fluid supplied to the drive units 92 is returned to the fluid hub 10 via a low temperature radiator 94 as illustrated in FIG. 9.

The heat exchanger 20 being one of the vehicle heat exchangers 20 is adapted to cool fluid received from the fluid pump 30a, 30b for circulation through the heat generating components, for example, the battery disposed in the vehicle, particularly, the electric or hybrid vehicle. The heat exchanger 20 is adapted to be mounted on a vehicle frame and is configured with mounting holes 22a for mounting the fluid pump 30a, 30b thereon with at least a portion of the fluid hub 10, particularly, the arms 11a supported between the fluid pump 30a, 30b and the heat exchanger 20. The heat exchanger 20 is a plate type heat exchanger of aluminium and formed by brazing multiple plates.

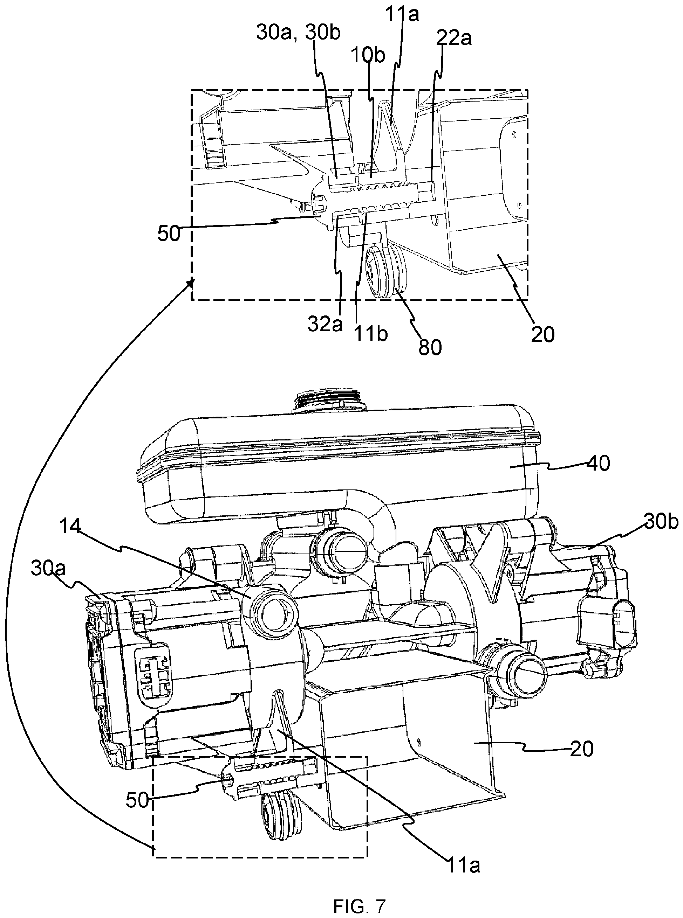

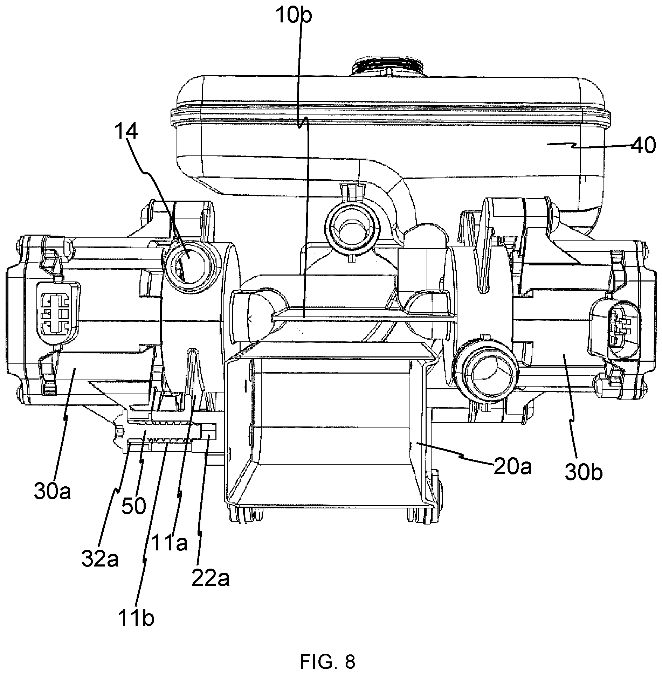

Further, the thermal management module 100 comprises common mounting bolts 50 adapted to sequentially pass through aligned mounting holes 32a, 11b and 22a formed on the fluid pump 30a, 30b, the arms 11a of the distribution web 7b and 9b of the coolant hub 10 and the heat exchanger 20 respectively as illustrated in FIG. 7 and FIG. 8. With such configuration, same bolts 50 used for mounting the fluid pumps 30a, 30b over the heat exchanger 20 are used for supporting the coolant hub 10 between the fluid pumps 30a, 30b and the heat exchanger 20. Accordingly, with such configuration, the number of mounting bolts is reduced as separate dedicated bolts are not required for the supporting the coolant hub 10.

Furthermore, the thermal management module 100 comprises brackets 80 secured to the heat exchanger 20 for mounting the heat exchanger 20 on the vehicle, particularly, the vehicle frame. In accordance with an embodiment of the present invention, the bracket 80 extends from the coolant hub 10, specifically distribution housing 10b of the coolant hub 10 gripped between the fluid pump 30a, 30b and the chiller 20 and is used for mounting the chiller 20 over the vehicle frame. Specifically, the brackets 80 are formed with mounting holes 82 that receive mounting bolts 84 for mounting the brackets 80 on the vehicle frame and dampers 82a are disposed between the mounting holes 82 and the mounting bolts 84 to prevent vibrations from vehicle frame from reaching the chiller 20 and the fluid pump 30a, 30b mounted on the chiller 20.

In any case, the invention cannot and should not be limited to the embodiments specifically described in this document, as other embodiments might exist. The invention shall spread to any equivalent means and any technically operating combination of means.

## Claims

1. A thermal management module (100) comprising:
• at least one vehicle heat exchanger (20);
• a fluid hub (10) comprising a plurality of fluid flow passages and at least one multi-way valve (14b) for defining and regulating fluid supply to the vehicle heat exchanger (20) to configure selective fluid communication between the fluid heat exchanger (20) and the fluid hub (10);
• at least one fluid pump (30a, 30b) for circulation of fluid through the fluid flow passages and the vehicle heat exchanger (20) and configuring fluid flow between the fluid hub (10) and the vehicle heat exchanger (20),
**characterized in that** the heat exchanger (20) with the fluid pump (30a, 30b) mounted thereon is adapted to be mounted on a vehicle and at least a portion of the fluid hub (10) is supported between the fluid pump (30a, 30b) and the heat exchanger (20).

2. The thermal management module (100) as claimed in the previous claim, wherein the heat exchanger (20) is configured with mounting holes (22a) for mounting the fluid pump (30a, 30b) on the heat exchanger (20).

3. The thermal management module (100) as claimed in any of the preceding claims, wherein the fluid hub (10) is of plastic material and is comprising a collector housing (10a) and a distribution housing (10b) being connected to and in fluid communication with each other.

4. The thermal management module (100) as claimed in the previous claim, wherein the collector housing (10a) extends in a first direction A and is in fluid communication with a surge tank (40).

5. The thermal management module (100) as claimed in any of claims 3 to 4, wherein the collector housing (10a) comprises openings (12a) and receives a bushel (13) of the multi-way valve (14b) therein that moves within the collector housing (10a) to selectively establish or disrupt fluid communication between different openings (12a) based on relative position of the bushel (13).

6. The thermal management module (100) as claimed in any of claims 3 to 5, wherein at least a portion of the distribution housing (10b) is mounted on the heat exchanger (20) and supported between the fluid pump (30a, 30b) and the heat exchanger (20), said distribution housing (10b) being adapted to distribute the fluid received thereby from the collector housing (10a) to the fluid pump (30a, 30b).

7. The thermal management module (100) as claimed in any of claims 4 to 6, wherein the distribution housing (1 0b) comprises a first distribution web (7b) and a second distribution web (9b) extending in opposite directions B and C substantially orthogonal to the first direction A.

8. The thermal management module (100) as claimed in claim 7, wherein the first distribution web (7b) and the second distribution web (9b) comprises a central portion (11c) and arms (11a) radially extending from the central portion (11c), the central portion (11c) is selectively in fluid communication with the collector hub (10a) based on operative configuration of the multi-way valve (14b) to supply fluid to the fluid pump (30a, 30b).

9. The thermal management module (100) as claimed in any of the preceding claims, wherein the heat exchanger (20) is a chiller adapted to cool fluid received from the fluid pump (30a, 30b) for circulation through the heat generating components disposed in the vehicle.

10. The thermal management module (100) as claimed in any of the preceding claims, wherein the fluid pump (30a, 30b) is in fluid communication with the fluid hub (10) on one side and the heat exchanger (20) on the other side.

11. The thermal management module (100) as claimed in any of the preceding claims comprising two fluid pumps (30a) and (30b) disposed on opposite sides of the heat exchanger (20).

12. The thermal management module (100) as claimed in claim 10, wherein a first fluid pump (30a) configures a first fluid circulation loop with the first fluid pump (30a) and the fluid hub (10) being part of the first fluid circulation loop, the first fluid pump (30a) is in fluid communication with the heat exchanger (20) via an outlet 14 formed on the fluid hub (10) and a connector (70).

13. The thermal management module (100) as claimed in any of the preceding claims further comprises mounting bolts (50) adapted to sequentially pass through aligned mounting holes (32a, 11b, 22a) formed on the fluid pump (30a, 30b), the fluid hub (10) and the heat exchanger respectively.

14. The thermal management module (100) as claimed in any of the preceding claims further comprises brackets (80) secured to the heat exchanger (20) to mount the heat exchanger (20) on the vehicle frame.

15. The thermal management module (100) as claimed in the previous claim, wherein the brackets (80) are formed with mounting holes (82) that receive mounting bolts (84) for mounting the brackets (80) on vehicle frame, dampers (82a) are disposed between the mounting holes (82) and the mounting bolts (84) to prevent vibrations from vehicle frame reaching the heat exchanger (20) and the fluid pump (30a, 30b) mounted on the heat exchanger (20).
